# EUROPÄISCHE PATENTANMELDUNG

(11) **EP 1 852 399 A2**
(43) Veröffentlichungstag der Anmeldung: **07.11.2007**
(21) Anmeldenummer: 07107465.2
(22) Anmeldetag: 03.05.2007
(51) Int. Cl.: C02F 3/12

(54) **Kleinkläranlage, Verfahren zur Behandlung von Abwasser**

(30) Priorität: 05.05.2006 DE 102006021108; 31.05.2006 DE 102006025393
(71) Anmelder: ACO SEVERIN AHLMANN GMBH & CO. KG, 24768 Rendsburg (DE)
(72) Erfinder:
(74) Vertreter: Bohnenberger, Johannes

(57) **Zusammenfassung**

Die Erfindung betrifft eine Kleinkläranlage zur Behandlung von Abwasser. Insbesondere betrifft die Erfindung eine Klcinkläranlage zur Behandlung von Abwasser mit einem ersten und mindestens einem zweiten Biologiebehälter mit jeweils mindestens einem Zulauf, einem Ablauf sowie einer Schlammrückführungsleitung. Des Weiteren umfasst die Kleinkläranlage einen Schlammfangbehälter mit einer Pumpe. Dabei sind die Biologiebehälter mit dem Schlammfangbehälter über Kupplungselemente so zu Modulkette zusammenschließbar, dass die Schlammrückführungsleitungen einen Schlammrückführungsstrang von der Schlammfangbehälter zum ersten Biologiebehälter bilden, wobei die Pumpe des Schlammfangbehälters so mit dem Schlammrückführungsstrang in Wirkverbindung steht, dass sie Rückstände aus dem Schlammfangbehälter über den Schlammrückführungsstrang in den ersten Biologiebehälter abführt.

## Beschreibung

Die Erfindung betrifft eine Kleinkläranlage zur Behandlung von Abwasser sowie ein entsprechendes Verfahren.

Kleinkläranlagen sind Anlagen zur Reinigung von Abwasser mit einem Bemessungswert von weniger als 50 Einwohnerwerten. Somit kommen sie bei Einzelhäusern, kleinen Siedlungen, Gastwirtschaften oder Schutzhütten, aber auch in der Industrie zur Vorklärung von Abwässern zum Einsatz.

Üblicherweise besteht so eine Kleinkläranlage aus einem Fettabscheider, einem Biologiebehälter und einer Filteranlage. In dem Fettabscheider werden im Abwasser enthaltene Reststoffe und aufschwimmende Fette abgetrennt. In dem Biologiebehälter wird das Abwasser häufig mittels eines Belebtschlammverfahrens (auch Belebungsverfahren) weiter geklärt. Hierbei wird das Abwasser durch biologische Aktivitäten von aeroben chemoorganoheterotrophen Mikroorganismen, dem so genannten Belebtschlamm, weitgehend von organischen Verunreinigungen befreit.

Man unterscheidet bei dem Belebtschlammverfahren zwischen zwei Vorgehensweisen. Zum einen kann das Abwasser den Biologiebehälter kontinuierlich durchlaufen und dabei gereinigt werden, zum anderen gibt es diskontinuierliche Verfahren, bei denen Abwasser in den Biologiebehälter bzw. die Biologiebehälter eingefüllt und in bestimmten Intervallen abgesaugt wird. Fast immer werden die Biologiebehälter zusätzlich belüftet, um den Abbau der Verschmutzung des Abwassers durch die Mikroorganismen zu verbessern.

Im Nachklärbecken bzw. im Schlammfangbehälter bzw. in der Übergabestation erfolgt eine Schlammabtrennung. Das heißt, der Belebtschlamm sowie übrige Feststoffe werden aus dem Abwasser ausgefiltert und entweder entsorgt oder dem Reinigungszyklus erneut zugeführt.

Besonders im Gastronomiebereich sowie in der Industrie stellt die Dimensionierung, also die Bestimmung einer geeigneten Größe der Kleinkläranlage, ein besonderes Problem dar. Mehrere Faktoren sind hierbei entscheidend. Es gilt, dem potentiellen Wachstum der Industrieanlage oder des Gastronomiebetriebs und die Menge des anfallenden Abwassers zu berücksichtigen. Weitere wichtige Faktoren sind der Grad der Verschmutzung des Abwassers, der sowohl kurzfristig als auch langfristig variieren kann, sowie die Anforderungen an die Reinheit des gefilterten Abwassers. So kann es beispielsweise vorkommen, dass aufgrund neuer gesetzlicher Regelungen das gefilterte Abwasser, das in das öffentliche Abwassernetz entsorgt wird, einen niedrigeren Fettgehalt aufweisen muss, als dies zur Zeit der Einrichtung der Kleinkläranlage nötig war.

Wie beschrieben, können auch die anderen Faktoren, die bei der Dimensionierung der Kleinkläranlage eine Rolle spielen, variieren. Den Betreibern von Kleinkläranlagen stellt sich daher das Problem, dass die Kläranlage neu an die Gegebenheiten angepasst werden muss. Um diesem Problem zu begegnen, ist es mitunter nötig, eine komplett neue Kleinkläranlage anzuschaffen oder die vorhandene Kleinkläranlage grundlegend zu überholen.

Des Weiteren ist es zur effizienten Betreibung einer Kleinkläranlage wünschenswert, dass diese möglichst genau an die Gegebenheiten angepasst ist. Die individuelle Fertigung und Abstimmung der Kleinkläranlage auf die Gegebenheiten ist jedoch sehr kostenintensiv. Deshalb werden die Kleinkläranlagen häufig überdimensioniert, wodurch ein erheblicher finanzieller Aufwand verursacht wird.

Ein weiteres Problem beim Betreiben von Kleinkläranlagen besteht darin, dass bedingt durch seltene Wartung, unsachgemäße Handhabung und einfache Konzeptionierung eine geringe Betriebssicherheit der Anlage vorliegt. So kann das unkontrollierte Zuführen von Abwasser mit einer hohen Chlorkonzentration die Kleinkläranlage beschädigen oder unbrauchbar machen, da der verwendete Belebtschlamm bzw. die Biologie abstirbt.

Ausgehend von diesen Problemen, ist es Aufgabe der vorliegenden Erfindung, eine Kleinkläranlage bereit zu stellen, die auf einfache und kostengünstige Weise optimal an jede Gegebenheit angepasst werden kann, sowie leicht erweiterbar ist. Die Kleinkläranlage sollte effizient und robust arbeiten. Des Weiteren soll ein entsprechend effizientes und robustes Verfahren zur Klärung von Abwasser aufgezeigt werden.

Diese Aufgabe wird erfindungsgemäß durch eine Kleinkläranlage gemäß dem Anspruch 1 und ein Verfahren gemäß dem Anspruch 18 gelöst. Weitere vorteilhafte Ausführungsformen ergeben sich aus den Unteransprüchen.

Insbesondere wird die Aufgabe durch eine Kleinkläranlage zur Behandlung von Abwasser gelöst, welche einen ersten und mindestens einen zweiten Biologiebehälter mit jeweils mindestens einem Zulauf, einem Ablauf, sowie einer Schlammrückführungsleitung und einen Schlammfangbehälter mit einer Pumpe umfasst, wobei die Biologiebehälter mit dem Schlammfangbehälter über Kuppelungselemente so zu Modulketten zusammenschließbar sind, dass die Schlammrückführungsleitungen einen Schlammrückführungsstrang von dem Schlammfangbehälter zum ersten Biologiebehälter bilden, wobei die Pumpe des Schlammfangbehälters so mit dem Schlammrückführungsstrang in Wirkverbindung steht, dass sie Rückstände aus der Schlammfangbehälter über den Schlammrückführungsstrang in den ersten Biologiebehälter abführt.

Der zentrale Gedanke der Erfindung besteht also darin, dass mehrere Biologiebehälter in Serie zusammengeschlossen werden und mit einem einzigen Schlammfangbehälter zusammenarbeiten. Somit kann die Kleinkläranlage je nach Bedarf, d.h. je nach Menge des Abwassers und dem Grad der Verschmutzung, angepasst werden. Die Biologiebehälter umfassen Schlammrückführungsleitungen, die bei einem Zusammenschluss mehrerer Biologiebehälter so zusammenwirken, dass sie einen Schlammrückführungsstrang bilden, der zur Abführung von Rückständen aus dem Schlammfangbehälter zurück in die Biologiebehälter dient. Die Modulkette sieht also so aus, dass der Kopf der Kette von einem ersten Biologiebehälter gebildet wird. Danach folgen mehrere zweite Biologiebehälter. Das Abwasser durchläuft als erstes den ersten Biologiebehälter, danach den mindestens einen zweiten Biologiebehälter und mündet dann in den Schlammfangbehälter, in dem Rückstände, insbesondere Biomasse, also Belebtschlamm, ausgefiltert wird. Diese Rückstände werden entgegen der Flussrichtung des Abwassers aus dem Schlammfangbehälter zurück zu dem ersten Biologiebehälter transportiert. Unabhängig von der Anzahl der verwendeten Biologiebehälter ergeben die Schlammrückführungsleitungen immer einen Schlammrückführungsstrang, der die besagte Rückführung der Rückstände gewährleistet.

Vorzugsweise umfassen die Biologiebehälter Belüftungsleitungen, die in der Modulkette über Kupplungselemente zu einem Belüftungsstrang für die Belüftung der Biologiebehälter zusammenschließbar sind. Um einen möglichst effizienten Abbau in den Biologiebehältern zu gewährleisten, ist es notwendig, die Biomassen in denselben ausreichend zu belüften. Hierfür umfassen die Biologiebehälter vorzugsweise Belüftungsleitungen, die so angeordnet sind, dass sie in der besagten Modulkette einen durchgehenden Belüftungsstrang bilden. Dieser Belüftungsstrang kann Luft für die einzelnen Biologiebehälter bereitstellen. Um diese Luft dem Biologiebehälter zuzuführen, sind vorzugsweise an jedem Biologiebehälter Abzweigungen vorgesehen, die einen Teil der Luft in das Innere des jeweiligen Biologiebehälters abführen. Die Modularität der Kleinkläranlage wird durch diese Belüftungsleitungen nicht beeinträchtigt.
Es ist vorteilhaft, wenn die Belüftungsleitungen zumindest abschnittsweise, insbesondere im Bereich der Kupplungselemente, parallel zu den Schlammrückführungsleitungen an oder in den Biologiebehältern angeordnet sind. Ein einfaches Anschließen der Biologiebehälter aneinander und an den Schlammfangbehälter ist somit möglich.

Vorzugsweise umfassen die Kupplungselemente der Belüftungsleitung Belüftungsleitungsverschraubungen. Zur Bildung des Belüftungsstranges müssen also lediglich die einzelnen Verschraubungen der Biologiebehälter zusammengefügt werden.

Vorzugsweise umfasst der erste Biologiebehälter einen Schlammrückführungsadapter zur Einleitung der Rückstände aus dem Schlammrückführungsstrang in den Zulauf des ersten Biologiebehälters. Die Biologiebehälter können also vorzugsweise im Wesentlichen baugleich ausgebildet werden. Um die Modulkette auszubilden, werden also mehrere dieser baugleichen Biologiebehälter aneinander angeschlossen. Es ergibt sich der besagte Schlammrückführungsstrang. Am Zulauf des ersten Biologiebehälters wird der Schlammrückführungsadapter so angebracht, dass die über den Schlammrückführungsstrang transportierten Rückstände zusammen mit dem ungereinigten Abwasser in den ersten Biologiebehälter einströmen. Der Schlammrückführungsadapter ist vorzugsweise als Verteilertopf ausgebildet.

Es ist besonders vorteilhaft, wenn der Schlammfangbehälter eine mit dem Belüftungsstrang kuppelbare Belüftungsquelle umfasst. Diese Belüftungsquelle versorgt den Belüftungsstrang mit Luft zur Belüftung der Biologiebehälter. Der Schlammfangbehälter hat vorzugsweise mindestens eine Kupplung, die an die Belüftungsleitung des ihm benachbarten Biologiebehälters anschließbar ist. Die Belüftung wird also zentral durch den Schlammfangbehälter mit vorzugsweise nur einer Belüftungsquelle gewährleistet.

Vorzugsweise sind die Schlammrückführungsleitungen zumindest abschnittsweise, insbesondere im Bereich der Kuppelelemente, parallel zu den Zuläufen und Abläufen angeordnet. In der Modulkette schließt der Ablauf des ersten Biologiebehälters mit dem Zulauf einer der zweiten Biologiebehälter ab. Die Kette wird fortgesetzt, bis der Ablauf des letzten Biologiebehälters mit einem Zulauf des Schlammfilters abschließt. Die Biologiebehälter lassen sich optimal untereinander zusammenschließen, wenn die Schlammrückführungsleitungen parallel zu den Zuläufen und Abläufen verlaufen. Wird also der Zulauf eines Biologiebehälters an den Ablauf eines weiteren Biologiebehälters gekuppelt, so bilden die Schlammrückführungsleitungen des jeweiligen Biologiebehälters einen Teil des Schlammrückführungsstrangs aus.

Bevorzugt verlaufen die Abwasserleitungen (Zulauf und Ablauf), die Belüftungsleitungen und die Schlammrückführungsleitungen im Wesentlichen parallel in und/oder an den Biologiebehältern.

Vorzugsweise umfassen die Kupplungselemente der Schlammrückführungsleitungen Schlammrückführungsleitungsverschraubungen. Der Schlammrückführungsstrang kann sich also genau so einfach wie der Belüftungsstrang durch ein Verschrauben der einzelnen Schlammrückführungsleitungen ausbilden lassen. Eine besonders einfache Montage und Demontage der Kleinkläranlage wird so gewährleistet.

Vorzugsweise liegt der Zulauf jedes Biologiebehälters höher als dessen Ablauf, oder befindet sich mit diesem auf gleicher Höhe. Die einzelnen Biologiebehälter können also auf eine Pumpvorrichtung verzichten. Das Abwasser dringt über den Zulauf in den Biologiebehälter ein, füllt diesen bis zu dem Niveau des Ablaufs und tritt durch den Ablauf wieder aus. Wird der Höhenunterschied des Zulaufs zum Ablauf geeignet gewählt, so wird auch ein Zurücklaufen des Abwassers verhindert.

Vorzugsweise umfassen die Biologiebehälter höhenverstellbare Behälterfüße. In der Modulkette kann also die Höhe der einzelnen Biologiebehälter so gestaltet werden, dass ein gewisses Gefälle vom ersten Biologiebehälter bis zum Schlammfangbehälter vorliegt. Somit kann in der gesamten Kette von Biologiebehältern auf Pumpen verzichtet werden, da ein Fluss des Abwassers vom Zulauf des ersten Biologiebehälters durch sämtliche zweiten Biologiebehälter bis zum Schlammfangbehälter entsteht. Auf eine individuelle Gestaltung der Biologiebehälter entsprechend ihrer Position in der Modulkette kann verzichtet werden.

Vorzugsweise umfasst die Kleinkläranlage mindestens einen Fettabscheider, der mit dem ersten Biologiebehälter kuppelbar ist. Eine übliche Modulkette setzt sich also aus einem Fettabscheider, gefolgt von mehreren Biologiebehältern, abgeschlossen durch einen Schlammfangbehälter zusammen. Der Fettabscheider filtert in einem ersten Schritt Fette aus dem Abwasser, bevor in einem weiteren Schritt das Abwasser in den Biologiebehältern gereinigt wird.

Weiterhin kann eine Nachdosierungsvorrichtung bereitgestellt werden, die mit mindesten einem der Biologiebehälter zur Zuführung von Belebtschlamm, insbesondere von Mikroorganismen, in Wirkverbindung steht. Das erneute Einbringen von Belebtschlamm stellt eine Form von Wartung dar, die sicherstellt, dass die Biologie in den einzelnen Biologiebehälter stets in einem Zustand ist, der eine sichere und effiziente Reinigung des Abwassers gewährleistet. Ein absterben der Biologie auf Grund von schlechter Handhabung, beispielsweise durch das Zuführen von Abwasser mit einer hohen Chlorkonzentration, kann verhindert werden. Der manuelle Wartungsaufwand, der von geschulten Personen durchgeführt werden muss, wird reduziert.

Vorzugsweise umfasst die Nachdosierungsvorrichtung Sensormittel zur Erfassung einer Belebtschlammkonzentration in mindestens einem der Biologiebehälter. Die Sensormittel ermöglichen es der Nachdosierungsvorrichtung, abhängig von der Belebtschlammkonzentration in den Biologiebehältern nachzudosieren, d. h. neuen oder regenerierten Belebtschlamm zuzuführen. Die Messung der Belebtschlammkonzentration kann direkt in den Biologiebehältern und/oder in den Zu- und/oder Abläufen erfolgen. Alternativ können für den Belebtschlamm schädliche Stoffe und deren Konzentration im Abwasser bestimmt werden. Eine Bestimmung der Belebtschlammkonzentration im Abwasser kann direkt oder indirekt, beispielsweise über die Reinigungsleistung der Kleinkläranlage erfolgen.

Die Nachdosierungsvorrichtung kann eine Steuerung umfassen. Diese Steuerung kann mit den Sensormitteln verbunden sein und die erzeugten Messdaten auswerten. Durch die Steuerung kann Menge und/oder Konzentration des zuzuführenden Belebtschlammes bestimmte werden. Ebenfalls kann die Steuerung den Zeitpunkt der Zugabe kontrollieren.

Als Ersatz der Steuerung oder in Verbindung mit dieser kann eine Zeitschaltanlage einen Teil der Nachdosierungsvorrichtung bilden. Diese Zeitschaltanlage kann Zeitpunkte vorgeben zu denen die Nachdosierung erfolgt. Die Nachdosierung kann so optimal auf die jeweilige Anwendung abgestimmt werden und die Leistungsfähigkeit der Kleinkläranlage erhöht sich. Eine möglicherweise abgestorbene Biologie wird wiederbelebt.

Vorzugsweise umfasst mindestens einer der Biologiebehälter mindestens ein Trennelement zur Begrenzung eines Wirbelschichtbereichs, der die eigentliche Biologie enthält. Die Trennelemente können als Trennbleche, beispielsweise ähnlich einem Sieb, ausgebildet sein. Bevorzugt befindet sich je ein Trennelement im Bereich des Zulaufs und ein weiteres im Bereich des Ablaufs eines Biologiebehälter. In der so definierten Wirbelschicht lagert sich die Biologie an. Die lokale Verteilung des Belebtschlammes bzw. der Biologe auf die mehreren Biologiebehälter wird auch im Betrieb aufrechterhalten. Durch die Begrenzung des Arbeitsbereichs der Biologie kann die Verschmutzung von weiteren Elementen der Biologierbehälter, beispielsweise der Abläufe, gering gehalten werden. Der Wirbelschichtbereich bzw. Arbeitsbereich ist besonderst geeignet, um die Konzentration des Belebtschlammes, insbesondere mit den Sensormitteln, zu kontrollieren.

Weiterhin wird besagte Aufgabe durch ein Verfahren zur Behandlung von Abwasser in einer Kleinkläranlage, insbesondere in einer Kleinkläranlage wie vorhergehend beschrieben, gelöst, wobei das Verfahren umfasst:
- ein Zuführen von Abwasser in mindestens einen Biologiebehälter,
- ein Reinigen des Abwassers mittels Belebtschlamm in dem mindestens einem Biologiebehälter und
- ein zumindest teilweises Ausfiltern des Belebtschlammes aus dem Abwasser in einem Schlammfangbehälter,
wobei das Verfahren durch ein sensorgesteuertes und/oder periodisches Nachdosieren einer Belebtschlammkonzentration in dem mindestens einem Biologiebehälter gekennzeichnet ist.

Das Nachdosieren sorgt für ein funktionales Aufrechterhalten einer Mindestkonzentration des Belebtschlammes in den Biologiebehältern. Die Effizienz der Anlage wird erhöht, der manuelle Wartungsaufwand verringert.
Vorzugsweise umfasst das Verfahren ein elektronisches Erfassen einer Belebtschlammkonzentration in mindestens einem Biologiebehälter. Das Erfassen kann beispielsweise durch die besagten Sensormittel erfolgen. Die Nachdosierung kann automatisch auf die aktuelle Konzentration abgestimmt werden.

Vorzugsweise umfasst das Nachdosieren ein Einbringen von Belebtschlamm in mindestens einen Biologiebehälter der Kleinkläranlage.

Vorzugsweise umfasst das Verfahren ein Lagern und/oder Wiederaufbereiten von Belebtschlamm, insbesondere in mindestens einem getrennten Behälter.

Vorzugsweise umfasst das Verfahren ein Rückführen des Belebtschlammes aus dem Schlammfangbehälter in mindestens einen der Biologiebehälter.

Vorzugsweise erfolgt das Nachdosierens in Intervallen größer oder gleich 5 Stunden, insbesondere größer oder gleich 10 Stunden.

Nachfolgend wird die Erfindung anhand von mehreren Ausführungsbeispielen beschrieben, die mittels Abbildungen näher erläutert werden. Hierbei zeigen:
- Fig. 1 die Außenansicht eines Biologiebehälters;
- Fig. 2 einen ersten schematischen Querschnitt durch den Biologiebehälter aus Fig. 1;
- Fig. 3 einen zweiten schematischen Querschnitt durch den Biologiebehälter aus Fig. 1;
- Fig. 4 eine Draufsicht auf eine Modulkette, umfassend mehrere Biologiebehälter und eine Übergabestation;
- Fig. 5 eine Seitenansicht der Modulkette aus Fig. 4;
- Fig. 6 eine weitere Modulkette in der Draufsicht, umfassend mehrere Biologiebehälter und eine Übergabestation;
- Fig. 7 eine Seitenansicht der Modulkette aus Fig. 6; und
- Fig. 8 einen schematischen Querschnitt durch einen mit Abwasser gefüllten Fettabscheider, Biologiebehälter und eine Übergabestation.

In der nachfolgenden Beschreibung werden für gleiche und gleich wirkende Teile dieselben Bezugsziffern verwendet.

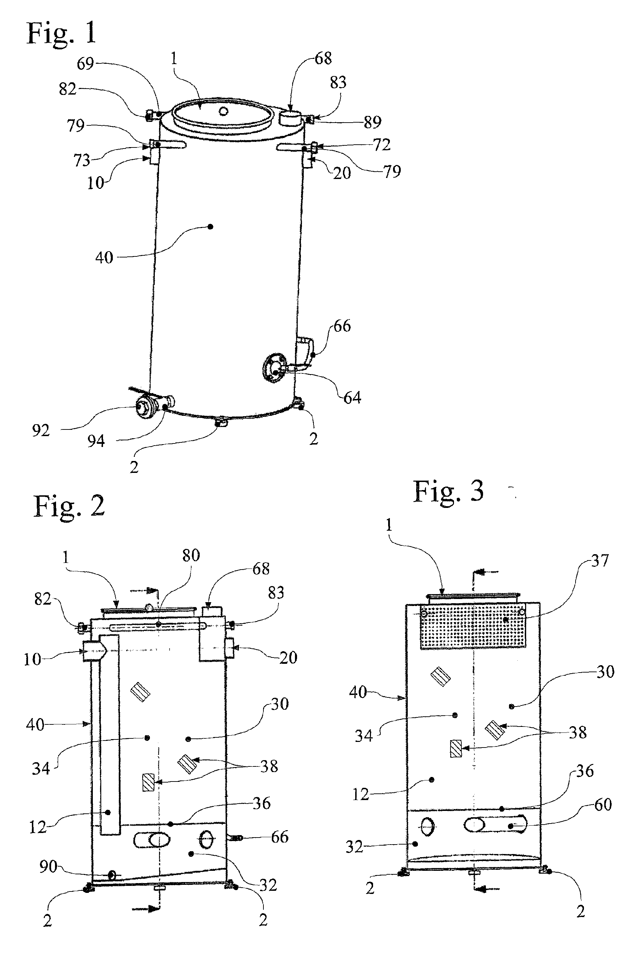

Ein erfindungsgemäßer Biologiebehälter 40, wie er in Fig. 1 dargestellt ist, weist im Wesentlichen eine zylindrische Form auf. Zum Aufstellen des Biologiebehälters 40 sind im unteren Bereich Behälterfüße 2 angebracht. Zur Entleerung eines Innenraums 30, z.B. zur Wartung oder Reinigung, umfasst der untere Bereich des Biologiebehälters 40 ebenfalls eine Entleerungsleitung 92 und ein Entleerungsventil 94. Die Entleerungsleitung 92 mündet über eine Entleerungsöffnung 90 (vgl. Fig. 2) in dem Innenraum 30 des Biologiebehälters 40.

Im oberen Bereich hat der Biologiebehälter 40 eine Zugangsöffnung 1, die sich im Wesentlichen parallel zu der Grundfläche des Zylinders erstreckt und die Wartung sowie die Kontrolle des Biologiebehälters 40 ermöglicht. Neben der Zugangsöffnung 1 befindet sich eine Entlüftungsöffnung 68, über die in den Biologiebehälter 40 eingebrachte Luft aus dem Innenraum 30 entweichen kann.

Ebenfalls im oberen Bereich erstrecken sich zwei Rohre parallel zum Bodenbereich teilweise durch das Innere des Biologiebehälters 40. Diese Rohre verlaufen zueinander im Wesentlichen parallel, und deren Endbereiche schließen ebenfalls parallel zueinander ab. Bei den Rohren handelt es sich um eine Belüftungsleitung 89 und eine Schlammrückführungsleitung 79. Das eine Ende der Schlammrückführungsleitung 79 sowie der Belüftungsleitung 89 schließt im Wesentlichen parallel zu einem Zulauf 10 des Biologiebehälters 40 ab. Über diesen Zulauf 10 gelangt Abwasser in den Innenraum 30 des Biologiebehälters 40. Im Wesentlichen symmetrisch verhält sich die andere Seite des Biologiebehälters 40. Das Ende der Belüftungsleitung 89, sowie der Schlammrückführungsleitung 79 mündet im Wesentlichen parallel zu dem Ablauf 20, durch den das Abwasser aus dem Innenraum 30 des Biologiebehälters 40 wieder austritt.

Die Schlammrückführungsleitungen 79 sowie die Belüftungsleitungen 89 erstrecken sich im Wesentlichen durchgehend von der einen Seite zur anderen Seite des Biologiebehälters 40. Sie dienen zum Transport von Rückständen bzw. von Luft. Die Belüftungsleitung 89 hat ungefähr mittig eine Abzweigung, über die ein Teil der transportierten Luft mittels einer Belüftungszuleitung 66 für den Biologiebehälter 40 abgezweigt wird. Die Belüftungszuleitung 66 leitet diesen Teil der Luft an der Außenseite des Behälters nach unten zu einer Belüftungskerze 60 (vgl. Fig. 3), die sich im Bodenbereich des Innenraums 30 erstreckt. Die Belüftungskerze 60 ist an der Außenseite des Biologiebehälters 40 mittels einer Belüftungskerzenbefestigung 64 angebracht und ragt in den Innenraum 30 hinein.

Zur Verdeutlichung des Innenlebens des Biologiebehälters 40 stellen die Figuren 2 und 3 einen Querschnitt durch diesen aus entgegen gesetzten Richtungen dar. Es zeigt sich, dass der Innenraum 30 über ein Lochblech 36 in zwei Kammern unterteilt ist. Im unteren Bereich des Biologiebehälters 40 eine etwas kleinere Vorkammer 32 und im oberen Bereich eine Hauptkammer 34. Besagte Filterkerze 60 erstreckt sich quer durch die Vorkammer 32, die über die Lüftungskerze 60 eingebrachte Luft steigt durch das Lochblech 36 in die Hauptkammer 34 und versorgt die dortige Biomasse, die unter anderem auf Aufwuchsträgern 38 angesiedelte Bakterien umfasst, mit für den Abbauprozess des Abwassers nötigen Sauerstoff. Die aufsteigende Luft kann dann durch die Entlüftungsöffnung 68 entweichen.

Das über den Zulauf 10 eingebrachte Abwasser wird im Innenraum 30 durch ein Einlaufrohr 12, das sich im Wesentlichen entlang der Mantelhülle des Zylinders des Biologiebehälters 40 erstreckt in den unteren Bereich, d.h. in die Vorkammer 32 abgeleitet. Das Abwasser steigt ebenfalls aus der Vorkammer 32 in die Hauptkammer und gelangt im oberen Bereich zu dem Ablauf 20. Ein im oberen Bereich angebrachtes weiteres Lochblech 37 hält größere Feststoffe in der Hauptkammer 34 zurück. Die beiden Lochbleche 36 und 37 bilden also einen definierten Bereich, den Arbeitsbereich.

In diesem Arbeitsbereich ist die Konzentration des Belebtschlammes höher. Es bietet sich an zur Kontrolle der Konzentration innerhalb des Arbeitsbereichs Sensormittel anzuordnen, die mit einer Steuereinrichtung (nicht dargestellt) verbunden sind. Kommt es zu einem Abfall des Konzentrationsniveaus unter einen vorbestimmten Schwellwert, so ist es angedacht, über eine Nachdosierungsvorrichtung, die durch besagte Steuereinrichtung betrieben wird, diesem Vorgang entgegenzuwirken. Der Abfall der Konzentration kann beispielsweise durch einen unsachgemäßen Einsatz der Kleinkläranlage verursacht werden.

Die Nachdosierungsvorrichtung führt im Falle einer niedrigen Konzentration des Belebtschlammes in einem der Biologiebehälter (40-45) Mikroorganismen, insbesondere Bakterien, aus einem Vorratsbehälter zu. Die Konzentration wird so automatisch auf einem vorgegeben Niveau gehalten. Da es beim Zuführen von neuem Abwasser zwangsläufig zu einer Abnahme der Konzentration kommt, wird dieser Effekt durch die Steuerung berücksichtigt. Da es in den Biologiebehältern (40-45) zu einer natürlichen Regeneration des Belebtschlammes kommt, muss die Nachdosierung nur dann erfolgen, wenn ein absterben der Biologie droht. Die Sensormittel und die Steuerung sind so ausgelegt, dass sie diese Situation sicher erkennen.

In einem weiteren Ausführungsbeispiel wird unter Verwendung einer Zeitschaltanlage ein Mal täglich eine vorbestimmte Menge an Mikroorganismen, jedem der vorhandenen Biologiebehältern (40-45) zugeführt. Ist in einem oder in mehreren Biologiebehältern (40-45) die Biologie abgestorben, so wird sie durch die Mikroorganismen wiederbelebt.

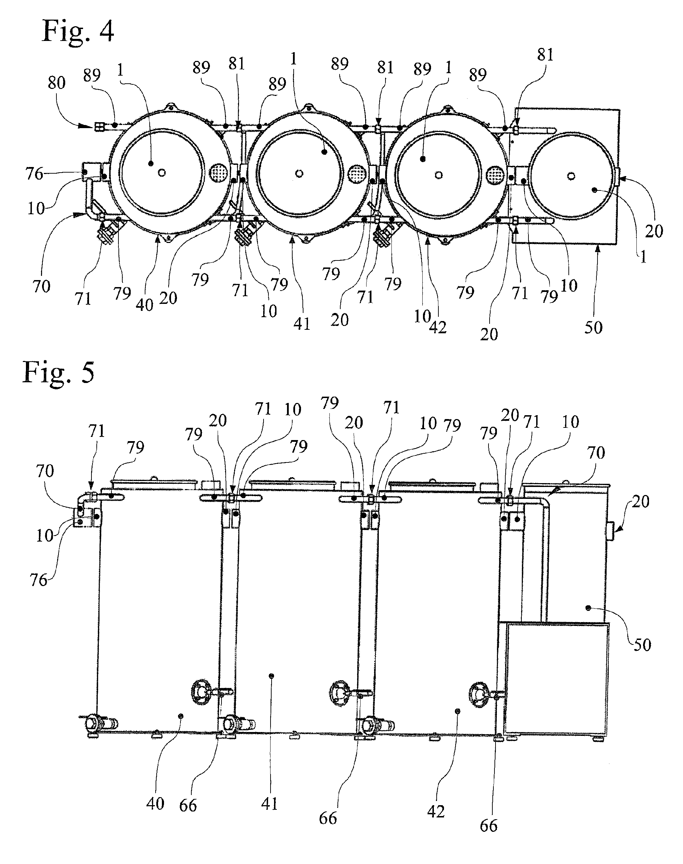

Aufgrund der Anordnung der Belüftungsleitungen 89, der Schlammrückführungsleitungen 79 sowie des Zulaufs 10 und des Ablaufs 20 lassen sich mehrere Biologiebehälter, die im Wesentlichen baugleich dem beschriebenen Biologiebehälter 40 sind, zu einer Kette zusammenschließen. Die Figuren 4 und 5 zeigen ein erstes Ausführungsbeispiel einer solchen Modulkette. Hierbei sind drei im Wesentlichen baugleiche Biologiebehälter 40 - 42 in Serie zusammengeschlossen. Das letzte Glied der Modulkette bildet einen Schlammfangbehälter bzw. eine Übergabestation 50. Das Abwasser gelangt über den Zulauf 10 des ersten Biologiebehälters 40 in dessen Innenraum 30 und tritt über den Ablauf 20 bereits vorgereinigt wieder aus. Der Ablauf 20 des ersten Biologiebehälters mündet direkt in den Zulauf 10 des zweiten Biologiebehälters 41 und dessen Ablauf 20 wiederum direkt in den Zulauf des dritten Biologiebehälters 42. Nach ausreichender biologischer Klärung gelangt das Abwasser aus dem zweiten Biologiebehälter 42 über dessen Ablauf in die Übergabestation 50. Das über dessen Zulauf 10 eintretende Abwasser wird in die Übergabestation 50 von weiteren Rückständen befreit, die sich dort ansammeln. Genauer gesagt, setzt sich z.B. die Biomasse, die durch das Abwasser mitgespült wurde, im Bodenbereich der Übergabestation 50 ab und wird von dort mittels einer Pumpe 78 in geeigneten Zeitintervallen in die Biologiebehälter 40 - 42 zurückgeführt. Zu dem Ablauf 20 der Übergabestation gelangt nur das gereinigte Oberflächenwasser, das im Wesentlichen frei von Rückständen, insbesondere von Biomasse, ist.

Um den Rücktransport der Biomasse von der Übergabestation 50 in die Biologiebehälter 40 - 42 zu gewährleisten, bildet die Modulkette des ersten Ausführungsbeispiels einen Schlammrückführungsstrang 70 aus, der an die Pumpe 78 angeschlossen ist. Die einzelnen Schlammrückführungsleitungen 79, die jeweils Teile der Biologiebehälter 40 - 42 sind, sind hierfür mittels mehrerer Kupplungen, so genannte Schlammrückführungsleitungsverschraubungen 71, zu dem Schlammrückführungsstrang 70 zusammengeschlossen. Eine Schlammrückführungsleitungsverschraubung 71 besteht, wie aus den Fig. 1 und 2 ersichtlich, aus einer Schlammrückführungsleitungsmutter 72 und einem Schlammrückführungsleitungsschneidring 73. Um zwei Biologiebehälter zu verbinden, werden diese jeweils miteinander verschraubt. Es ergibt sich also ein durchgehender Schlammrückführungsstrang 70, der bis zum ersten Biologiebehälter der Modulkette reicht. Dort werden mittels eines Schlammrückführungsadapters 76 die Rückstände aus der Übergabestation 50 in den Zulauf des ersten Biologiebehälters 40 eingeleitet.

Die Übergabestation 50 umfasst auch eine Belüftungsquelle, die zur Versorgung der einzelnen Biologiebehälter 40 - 42 mit ausreichend Luft dient. Um jeden der Biologiebehälter 40 - 42 zu versorgen, ist ein Belüftungsstrang 80 vorgesehen, der sich im Wesentlichen parallel zu dem Schlammrückführungsstrang 70 erstreckt. Ähnlich wie der Schlammrückführungsstrang 70 setzt sich auch der Belüftungsstrang 80 aus mehreren Belüftungsleitungen 89 zusammen, die wie bereits beschrieben, jeweils Teile des jeweiligen Biologiebehälters 40 - 42 bilden. Die Belüftungsleitungen 89 werden über Kupplungselemente, insbesondere über Belüftungsleitungsverschraubungen 81 aneinander befestigt. Wie aus Fig. 1 ersichtlich, umfassen diese Belüftungsleitungsmuttern 82 und Belüftungsleitungsschneidringe 83, die bei der Kupplung der einzelnen Biologiebehälter 40 - 42 ineinander eingreifen. Das der Übergabestation 50 abgewandte Ende des Belüftungsstrangs 80 ist verschlossen. Wie bereits beschrieben, gelangt Luft aus dem Belüftungsstrang 80 in den jeweiligen Biologiebehälter 40 - 42.

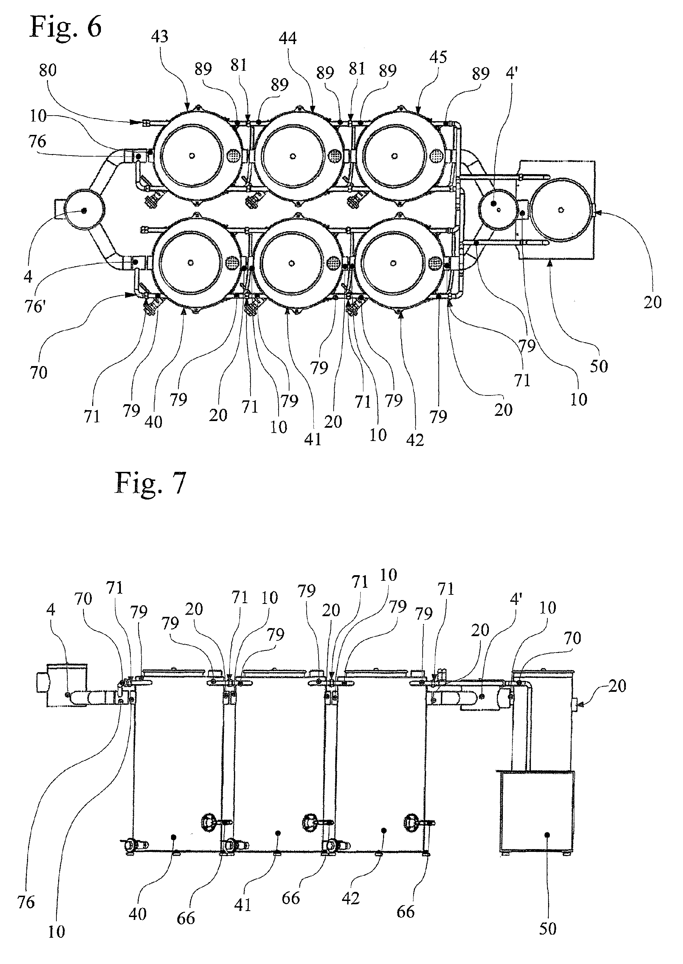

Ein zweites Ausführungsbeispiel einer Modulkette wird in den Figuren 6 und 7 gezeigt. Hierbei sind jeweils drei Biologiebehälter 40 - 42 bzw. 43 - 45 zu einer Serie von Biologiebehältern zusammengeschlossen. Das zu klärende Abwasser wird über ein T-Stück bzw. einen Verteilertopf 4 zu gleichen Teilen in die erste und zweite Serie von Biologiebehältern 40 - 45 eingeleitet. Nachdem das Abwasser die jeweilige Serie von Biologiebehältern 40 - 45 durchlaufen hat, wird es über ein weiteres T-Stück bzw. ein weiterer Verteilertopf 4' wieder zusammengeführt und gelangt über den Zufluss 10 in die Übergabestation 50. Weder die Übergabestation 50 noch die einzelnen Biologiebehälter 40 - 45 des zweiten Ausführungsbeispiels unterscheiden sich von denen des ersten Ausführungsbeispiels.

Sowohl die erste Serie von Biologiebehältern 40 - 42, als auch die zweite Serie von Biologiebehältern 43 - 45 bilden jeweils einen Belüftungsstrang 80 und einen Schlammrückführungsstrang 70 aus. Zur Speisung dieser Stränge durch die Übergabestation 50 sind weitere Verteilertöpfe vorgesehen. Die Rückstände aus der Übergabestation 50 werden jeweils in den vorderen Biologiebehälter 40 bzw. 43 der jeweiligen Serie eingeleitet. Ähnlich wie im ersten Ausführungsbeispiel ist hierfür jeweils ein Schlammrückführungsadapter 76 an den Zuläufen 10 der Biologiebehälter 40 und 43 vorgesehen.

Anhand der Ausführungsbeispiele lässt sich erkennen, dass aufgrund des modularen Aufbaus der Kleinkläranlage eine beliebige Anzahl von Biologiebehältern 40 - 45 je nach Anforderung miteinander kombiniert werden können. Eine individuelle Ausbildung der einzelnen Biologiebehälter 40 - 45 ist nicht nötig. Durch einfache Kupplungselemente, also durch die Schlammrückführungsleitungsverschraubungen 71 und Belüftungsleitungsverschraubungen 81 ergeben sich durchgehende Schlammrückführungsstränge 80 und Belüftungsstränge 70. Die modular zusammengeschlossenen Biologiebehälter 40 - 45 wirken also im Endeffekt wie ein einziger großer Biologiebehälter.

Für den Fachmann ist es offensichtlich, dass durch das Parallelschalten von mehreren Biologiebehälterserien gemäß dem zweiten Ausführungsbeispiel die Durchflussrate einer Kleinkläranlage erhöht werden kann. Durch das Verlängern der einzelnen Serien, also durch das Vorsehen von mehreren Biologiebehältern 40 - 45 in einer Kette, kann ein höherer Verschmutzungsgrad des Abwassers bewältigt werden. Dem Fachmann ist es also möglich, ohne größeren Bauaufwand für jede Anwendung entsprechend vorzusorgen. Ein Ausbau der Kleinkläranlage ist aufgrund der Modularität ebenfalls einfach möglich.

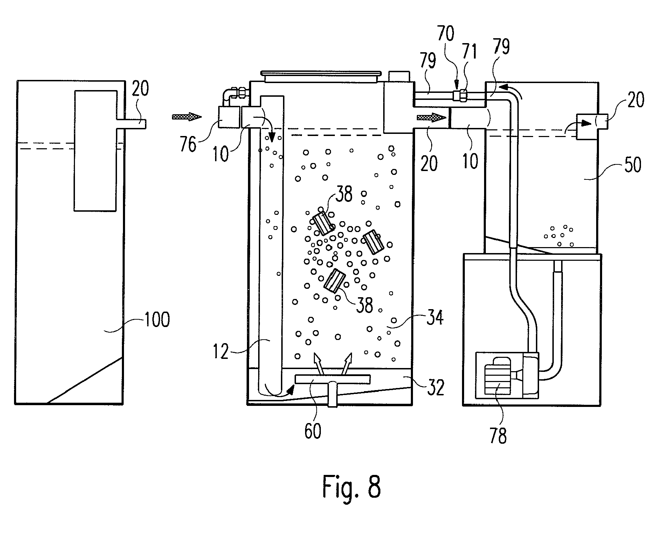

Häufig schaltet man den Biologiebehältern 40 - 45 einen Fettabscheider 100 (vgl. Fig. 8) vor.

### Bezugszeichenliste

- 1: Zugangsöffnung
- 2: Behälterfuß
- 4, 4': Verteilertopf
- 10: Zulauf
- 12: Einlaufrohr
- 20: Ablauf
- 30: Innenraum
- 32: Vorkammer
- 34: Hauptkammer
- 36, 37: Lochblech
- 38: Aufwuchsträger
- 40 - 45: Biologiebehälter
- 50: Übergabestation
- 60: Belüftungskerze
- 64: Belüftungskerzenbefestigung
- 66: Belüftungszuleitung
- 68: Entlüftungsöffnung
- 70: Schlammrückführungsstrang
- 71: Schlammrückführungsleitungsverschraubung
- 72: Schlammrückführungsleitungsmutter
- 73: Schlammrückführungsleitungsschneidring
- 76: Schlammrückführungsadapter
- 78: Schlammrückführungspumpe
- 79: Schlammrückführungsleitung
- 80: Belüftungsstrang
- 81: Belüftungsleitungsverschraubung
- 82: Belüftungsleitungsmutter
- 83: Belüftungsleitungsschneidring
- 89: Belüftungsleitung
- 90: Entleerungsöffnung
- 92: Entleerungsleitung
- 94: Entleerungsventil
- 100: Fettabscheider

## Patentansprüche

1. Kleinkläranlage zur Behandlung von Abwasser, umfassend
einen ersten und mindestens einen zweiten Biologiebehälter (40-45) mit jeweils mindestens einem Zulauf (10), einem Ablauf (20) sowie einer Schlammrückführungsleitung (79) und
eine Schlammfangbehälter (50) mit einer Pumpe (78), wobei die Biologiebehälter (40-45) mit dem Schlammfangbehälter (50) über Kupplungselemente so zu Modulkette zusammenschließbar sind,
dass die Schlammrückführungsleitungen (79) einen Schlammrückführungsstrang (70) von der Schlammfangbehälter (50) zum ersten Biologiebehälter (40-45) bilden, wobei die Pumpe (78) der Schlammfangbehälter (50) so mit dem Schlammrückführungsstrang (70) in Wirkverbindung steht, dass sie Rückstände aus dem Schlammfangbehälter (50) über den Schlammrückführungsstrang (70) in den ersten Biologiebehälter (40-45) abführt.

2. Kleinkläranlage nach Anspruch 1,
**dadurch gekennzeichnet, dass**
die Biologiebehälter (40-45) Belüftungsleitungen (89) umfassen, die in der Modulkette über Kupplungselement zu einem Belüftungsstrang (80) für die Belüftung der Biologiebehälter (40-45) zusammenschließbar sind.

3. Kleinkläranlage nach einem der vorhergehenden Ansprüche, insbesondere nach Anspruch 2,
**dadurch gekennzeichnet, dass**
die Belüftungsleitungen (89) zumindest abschnittsweise, insbesondere im Bereich der Kupplungselemente, parallel zu den Schlammrückführungsleitungen (79) an den Biologiebehältern (40-45) angeordnet sind.

4. Kleinkläranlage nach einem der vorhergehenden Ansprüche, insbesondere nach Anspruch 2 oder 3,
**dadurch gekennzeichnet, dass**
die Kupplungselemente der Belüftungsleitungen (89) Belüftungsleitungsverschraubungen (81) umfassen.

5. Kleinkläranlage nach einem der vorhergehenden Ansprüche,
**dadurch gekennzeichnet, dass**
der erste Biologiebehälter (40-45) einen Schlammrückführungsadapter (76) zur Einleitung der Rückstände aus dem Schlammrückführungsstrang (70) in den Zulauf (10) des ersten Biologiebehälters (40-45) umfasst.

6. Kleinkläranlage nach einem der vorhergehenden Ansprüche,
**dadurch gekennzeichnet, dass**
die Biologiebehälter (40-45) im Wesentlichen baugleich sind.

7. Kleinkläranlage nach einem der vorhergehenden Ansprüche,
**dadurch gekennzeichnet, dass**
die Schlammfangbehälter (50) eine mit dem Belüftungsstrang (80) kuppelbare Belüftungsquelle umfasst.

8. Kleinkläranlage nach einem der vorhergehenden Ansprüche,
**dadurch gekennzeichnet, dass**
die Schlammrückführungsleitungen (79) zumindest abschnittsweise, insbesondere im Bereiche der Kupplungselemente, parallel zu den Zuläufen (10) und Abläufen (20) angeordnet sind.

9. Kleinkläranlage nach einem der vorhergehenden Ansprüche,
**dadurch gekennzeichnet, dass**
die Kupplungselemente der Schlammrückführungsleitungen (79) Schlammrückführungsleitungsverschraubungen (71) umfassen.

10. Kleinkläranlage nach einem der vorhergehenden Ansprüche,
**dadurch gekennzeichnet, dass**
der Zulauf (10) jedes Biologiebehälter (40-45) höher liegt als dessen Ablauf (20).

11. Kleinkläranlage nach einem der vorhergehenden Ansprüche,
**dadurch gekennzeichnet, dass**
die Biologiebehälter (40-45) höhenverstellbare Behälterfüße (2) umfassen.

12. Kleinkläranlage nach einem der vorhergehenden Ansprüche,
**gekennzeichnet durch**
mindestens einen Fettabscheider (100), der mit dem ersten Biologiebehälter (40-45) kuppelbar ist.

13. Kleinkläranlage nach einem der vorhergehenden Ansprüche,
**gekennzeichnet durch**
eine Nachdosierungsvorrichtung, die mit mindestens einem der Biologiebehälter (40-45) zur Zuführung von Belebtschlamm in Wirkverbindung steht.

14. Kleinkläranlage nach einem der vorhergehenden Ansprüche, insbesondere nach Anspruch 13,
**dadurch gekennzeichnet, dass**
die Nachdosierungsvorrichtung einen Behälter zur Lagerung und/oder Herstellung und/oder Regeneration von Belebtschlamm umfasst.

15. Kleinkläranlage nach einem der vorhergehenden Ansprüche, insbesondere nach Anspruch 13 oder 14,
**dadurch gekennzeichnet, dass**
die Nachdosierungsvorrichtung Sensormittel zur Erfassung einer Belebtschlammkonzentration in mindestens einem der Biologiebehälter (40-45) umfasst.

16. Kleinkläranlage nach einem der vorhergehenden Ansprüche, insbesondere nach einem der Ansprüche 13 bis 15,
**dadurch gekennzeichnet, dass**
die Nachdosierungsvorrichtung eine Steuerung und/oder eine Zeitschaltanlage umfasst.

17. Kleinkläranlage nach einem der vorhergehenden Ansprüche,
**dadurch gekennzeichnet, dass**
mindestens einer der Biologiebehälter (40-45) Trennelemente (36, 37) zur Begrenzung eines Wirbelschichtbereichs umfasst.

18. Verfahren zur Behandlung von Abwasser in einer Kleinkläranlage, insbesondere in einer Kleinkläranlage nach einem der vorhergehenden Ansprüche, umfassend:
ein Zuführen von Abwasser in mindestens einen Biologiebehälter (40-45),
ein Reinigen des Abwassers mittels Belebtschlamm in dem mindestens einem Biologiebehälter (40-45) und
ein zumindest teilweises Ausfiltern des Belebtschlammes aus dem Abwasser in einem Schlammfangbehälter (50),
**gekennzeichnet durch**
ein sensorgesteuertes und/oder periodisches Nachdosieren einer Belebtschlammkonzentration in dem mindestens einem Biologiebehälter (40-45).

19. Verfahren nach Anspruch 18,
**gekennzeichnet durch**
ein elektronisches Erfassen einer Belebtschlammkonzentration in mindestens einem Biologiebehälter (40-45).

20. Verfahren nach Anspruch 18 oder 19,
**dadurch gekennzeichnet, dass**
das Nachdosieren ein Einbringen von Belebtschlamm in mindestens einen Biologiebehälter (40-45) der Kleinkläranlage umfasst.

21. Verfahren nach einem der Ansprüche 18 bis 20,
**gekennzeichnet durch**
ein Lagern und/oder Wiederaufbereiten von Belebtschlamm, insbesondere in mindestens einem getrennten Behälter.

22. Verfahren nach einem der Ansprüche 18 bis 21,
**gekennzeichnet durch**
ein Rückführen des Belebtschlammes aus dem Schlammfangbehälter (50) in mindestens einen der Biologiebehälter (40-45).

23. Verfahren nach einem der Ansprüche 18 bis 22,
**dadurch gekennzeichnet, dass**
das Nachdosierens in Intervallen größer oder gleich 5 Stunden, insbesondere größer oder gleich 10 Stunden erfolgt.
